# EUROPÄISCHE PATENTSCHRIFT

(11) **EP 3 456 697 B1**
(45) Veröffentlichungstag und Bekanntmachung des Hinweises auf die Patenterteilung: **15.07.2026**
(21) Anmeldenummer: 18192454.9
(22) Anmeldetag: 04.09.2018
(51) Int. Cl.: C04B 35/628, C04B 35/80

(54) **VERFAHREN ZUR BESCHICHTUNG EINES KOHLENSTOFFHALTIGEN FASERGEBILDES UND VERFAHREN ZUR HERSTELLUNG EINES FASERVERSTÄRKTEN WERKSTOFFES**
METHOD FOR COATING A CARBONACEOUS FIBROUS STRUCTURE AND METHOD FOR PRODUCING A FIBRE REINFORCED MATERIAL
PROCÉDÉ DE REVÊTEMENT D'UNE STRUCTURE FIBREUSE CONTENANT DU CARBONE ET PROCÉDÉ DE FABRICATION D'UN MATÉRIAU RENFORCÉ PAR DES FIBRES

(30) Priorität: 18.09.2017 DE 102017121544
(43) Veröffentlichungstag der Anmeldung: 20.03.2019
(73) Patentinhaber: Deutsches Zentrum für Luft- und Raumfahrt e.V., 53227 Bonn (DE)
(72) Erfinder: Mainzer, Bernd, 70184 Stuttgart (DE); Kütemeyer, Marius, 75181 Pforzheim (DE)
(74) Vertreter: Hoeger, Stellrecht & Partner Patentanwälte mbB

(56) Entgegenhaltungen:
- DE-A1- 19 815 309
- DE-T2- 60 125 798
- US-A- 5 021 367
- RAETHER ET AL: "Oxidation behaviour of carbon short fibre reinforced C/SiC composites", JOURNAL OF THE EUROPEAN CERAMIC SOCIETY, ELSEVIER, AMSTERDAM, NL, vol. 27, no. 2-3, 19 November 2006 (2006-11-19), pages 1217 - 1221, XP005729734, ISSN: 0955-2219, DOI: 10.1016/J.JEURCERAMSOC.2006.04.019

## Beschreibung

Die Erfindung betrifft ein Verfahren zur Beschichtung eines kohlenstoffhaltigen Fasergebildes.

Ferner betrifft die Erfindung ein Verfahren zur Herstellung eines faserverstärkten Werkstoffes.

Die DE 101 61 218 B4 offenbart ein Verfahren zum Oxidationsschutz faserverstärkter, kohlenstoffhaltiger Verbundwerkstoffe, deren Matrix zumindest in der Randschicht Siliziumkarbid enthält.

Die EP 1 357 310 B1 offenbart ein Verfahren zur Herstellung von Verbundwerkstoffen, bei dem ein poröser Kohlenstoff/Kohlenstoffverbundkörper hergestellt wird, welcher beschichtete Kohlenstofffasern enthält, und dann eine Schmelzinfiltration mit einer Metallschmelze, die Silizium und Kupfer enthält, durchgeführt wird. Zumindest ein Teil des Kohlenstoffs reagiert mit dem Silizium der Schmelze unter Bildung von Siliziumkarbid.

DE19815309A1 offenbart ein Verfahren zur Herstellung einer Verstärkungsfaser auf der Basis von Kohlenstoff, Stickstoff, Bor und/oder Silizium, insbesondere für Faserverbundwerkstoffe.

DE60125798T2 offenbart Verbundstoffe mit keramischer Matrix.

Raether et al: "Oxidation behaviour of carbon short fibre reinforced C/SiC composites", Journal of the European Ceramic Society, Elsevier, Amsterdam, NL, Bd. 27, Nr. 2-3, 19. November 2006 (2006-11-19), Seiten 1217-1221, ISSN: 0955-2219, offenbart das Oxidationsverhalten von kohlenstoffkurzfaserverstärkten C/SiC-Verbundstoffen.

Es liegt dabei die Aufgabe zugrunde, kohlenstoffhaltige Fasergebilde derart zu beschichten, dass Kohlenstoffmaterial des Fasergebildes vor reaktiven Angriffen geschützt werden kann.

Diese Aufgabe wird bei dem eingangs genannten Verfahren erfindungsgemäß dadurch gelöst, dass eine Schmelze hergestellt wird, welche einen Carbidbildner umfasst, und dass das Fasergebilde in Kontakt mit der Schmelze gebracht wird, wobei das Fasergebilde derart mit der Schmelze in Kontakt gebracht wird, dass die Schmelze ausschließlich mit Kohlenstoff des Fasergebildes reagiert, wobei der Carbidbildner mit Kohlenstoff des Fasergebildes reagiert und eine Carbidschicht bildet, und wobei das kohlenstoffhaltige Fasergebilde mindestens eines der Folgenden ist:
- ein Faserfilament, welches insbesondere aus Kohlenstoff ist,
- ein Faserbündel aus Faserfilamenten,
- ein Gewebe, Gewirke, Gestricke aus Faserbündeln oder Faserfilamenten,
- Kurzfasern.

Der Carbidbildner ist beispielsweise Silicium, Zirconium, Hafnium oder Wolfram.

Durch das erfindungsgemäße Verfahren kann an einer Faser des Fasergebildes eine Carbidschicht hergestellt werden, welche insbesondere Kohlenstoff umgibt und dadurch die Faser passiviert.

Es hat sich gezeigt, dass sich eine Beschichtung als äußere Mantelschicht mit guter Dickenhomogenität herstellen lässt, welche für einen guten Schutz eines (Kohlenstoff-)Kerns der Faser sorgt.

Es wird das Fasergebilde derart mit der Schmelze in Kontakt gebracht, dass die Schmelze ausschließlich mit Kohlenstoff des Fasergebildes reagiert. Es wird gewissermaßen das "isolierte Fasergebilde" ohne Matrixmaterial oder dergleichen in Kontakt mit der Schmelze gebracht. Der Carbidbildner der Schmelze kann dann nur mit Kohlenstoff des Fasergebildes reagieren. Es gibt keinen weiteren zur Reaktion bereitstehenden Kohlenstoff außer dem Kohlenstoff des Fasergebildes.

Insbesondere ist ein äußerer Mantel einer Faser des kohlenstoffhaltigen Fasergebildes aus Kohlenstoff. Dadurch kann der Carbidbildner an diesen Mantel reaktiv angreifen und es lässt sich dadurch ein schützender Carbildmantel bilden.

Insbesondere wird dann an einer Faser des Fasergebildes eine Carbidschicht als äußerer Mantel hergestellt. Eine Oberfläche dieses äußeren Mantels ist die Oberfläche des entsprechenden Fasergebildes.

Es kann dabei vorgesehen sein, dass das kohlenstoffhaltige Fasergebilde vollständig aus Kohlenstoff hergestellt ist, oder eine äußere Kohlenstoffschicht umfasst. Wenn das kohlenstoffhaltige Fasergebilde vollständig aus Kohlenstoff hergestellt ist, dann ist entsprechend eine durchgehende und damit auch äußere Kohlenstoffschicht vorhanden, an die Carbidbildner angreifen kann. Wenn beispielsweise die Faser einen Kern umfasst (welcher aus Kohlenstoff ist oder auch aus einem anderen Material sein kann) und/oder eine "zweitäußerste" Schicht umfasst, welche nicht aus Kohlenstoff ist, dann stellt die äußere Kohlenstoffschicht den Kohlenstoff zur Carbidbildung bereit. Insbesondere bildet dann die äußere Kohlenstoffschicht eine Opferschicht, welche verwendet wird, um die Carbidbeschichtung herzustellen.

Das kohlenstoffhaltige Fasergebilde ist mindestens eines der Folgenden:
- ein Faserfilament, welches insbesondere aus Kohlenstoff ist,
- ein Faserbündel aus Faserfilamenten,
- ein Gewebe, Gewirke, Gestricke aus Faserbündeln oder Faserfilamenten,
- Kurzfasern.

Wenn ein Faserfilament aus Kohlenstoff mit einer entsprechenden Beschichtung versehen ist, dann ergibt sich ein beschichtetes Faserfilament. Das beschichtete Faserfilament ist von der Carbidschicht vollständig umhüllt. Ein Faserbündel aus Faserfilamenten ist vorzugsweise dadurch mit einer Beschichtung versehen, dass jedes einzelne Faserfilament mit einer Beschichtung versehen wird. Ein Faserfilament oder Faserbündel kann wiederum ein Gewebe, Gewirke, Gestricke oder dergleichen bilden. Es ist grundsätzlich auch möglich, dass Kurzfasern (die insbesondere eine Länge kleiner oder gleich 60 mm aufweisen) mit einer entsprechenden Carbidbeschichtung versehen werden.

Insbesondere sind dann an einem Faserbündel aus einer Mehrzahl von Faserfilamenten im Wesentlichen alle Faserfilamente (vorzugsweise jedes Faserfilament) mit einer Carbidmaterial-Umhüllung versehen. Diese einzelnen Umhüllungen der Faserfilamente bilden dann die Carbidschicht-"Hülle" für das Faserbündel. Insbesondere wird Carbidbildner, wenn ein Faserbündel aus Faserfilamenten in Kontakt mit der Carbidbildner-Schmelze gebracht wird, in Zwischenräume zwischen Faserfilamenten gezogen (insbesondere durch Kapillarkräfte). Dies ermöglicht eine entsprechende Reaktion mit Kohlenstoff der Faserfilamente, um vorzugsweise jedes Faserfilament in einem Faserbündel mit der entsprechenden Carbidmaterial-Umhüllung zu versehen. Ein Faserbündel kann dabei mehrere Hundert oder mehrere Tausend Faserfilamente umfassen.

Es hat sich als besonders günstig erwiesen, wenn die Schmelze Bor enthält und insbesondere ein Carbidbildner-Bor-Gemisch ist. Es lässt sich dadurch eine kontrollierte Reaktion für die Carbidbildung erreichen. Insbesondere lassen sich dadurch Schichten an Carbidmaterial mit definierter Schichtdicke herstellen.

Insbesondere liegt der Anteil an Bor in der Schmelze im Bereich zwischen 2 Massenprozent und 20 Massenprozent, insbesondere im Bereich zwischen 5 Massenprozent und 11 Massenprozent und vorzugsweise im Bereich zwischen 6 Massenprozent und 10 Massenprozent. Bei einem konkreten Ausführungsbeispiel liegt der Massenanteil an Bor in der Schmelze bei ca. 8 Massenprozent. Die Schmelze ist beispielsweise eine Siliciumschmelze oder Zirconiumschmelze.

Es kann dabei günstig sein, wenn die Schmelze ein eutektisches Gemisch ist.

Günstig ist es, wenn eine Kontaktzeit des Fasergebildes mit der Schmelze derart gesteuert wird, dass sich eine bestimmte Schichtdicke einer äußeren Carbidschicht an einer Faser des Fasergebildes ergibt. Grundsätzlich lässt sich durch das erfindungsgemäße Verfahren eine Schichtdicke steuern, wobei eine homogene Schichtdicke für eine Umhüllung herstellbar ist.

Bei einer Ausführungsform wird das In-Kontakt-Bringen des Fasergebildes mit der Schmelze in einem Ofen durchgeführt. Es lässt sich so die Schmelze erzeugen und im Schmelzzustand halten und es lässt sich auf einfache Weise beispielsweise durch Eintauchen des Fasergebildes in die Schmelze der Kontakt herstellen.

Beispielsweise liegt eine Kontaktzeit zwischen dem Fasergebilde und der Schmelze bei mindestens 5 s und beispielsweise bei mindestens 2 min und insbesondere mindestens 4 min und insbesondere mindestens 6 min und insbesondere mindestens 8 min und vorzugsweise bei mindestens 10 min. Bei einem konkreten Ausführungsbeispiel liegt die Kontaktzeit bei ca. 12 min, wobei die Schmelze in einem Ofen hergestellt wurde und insbesondere eine Siliciumschmelze ist. Die Kontaktzeit ist insbesondere anlagentechnisch vorgegeben. Grundsätzliches Ziel ist es, eine möglichst kurze Kontaktzeit zu erreichen.

Beispielsweise weist eine Faser (als Faserbündel oder Faserfilament) des Fasergebildes eine Dicke im Bereich zwischen 1 µm und 15 µm auf. Es hat sich gezeigt, dass mindestens in diesem Größenbereich sich eine homogene Carbidbeschichtung mit einstellbarer Schichtdicke ergibt.

Insbesondere liegt eine Schichtdicke der hergestellten Carbidschicht an einer Faser des Fasergebildes im Bereich zwischen 0,2 µm und 5 µm.

Bei einem Ausführungsbeispiel wird das Fasergebilde in die Schmelze eingetaucht, wobei insbesondere die Schmelze in einem Behälter aufgenommen ist. Dadurch ergibt sich ein einfaches In-Kontakt-Bringen zwischen dem Fasergebilde und der Schmelze. Es sind auch andere Arten, des In-Kontakt-Bringens möglich, wie beispielsweise Aufbringen (beispielsweise durch Tröpfeln oder Gießen) der Schmelze über dem Fasergebilde, oder wie beispielsweise Überströmung des Fasergebildes mit der Schmelze.

Bei einem konkreten Ausführungsbeispiel ist der Carbidbildner Silicium. Es lässt sich so eine SiC-Beschichtung herstellen.

Ein erfindungsgemäß hergestelltes Fasergebilde lässt sich vorteilhafterweise zur Herstellung eines faserverstärkten Werkstoffes verwenden. Es lässt sich dadurch beispielsweise ein faserverstärkter keramischer Werkstoff oder metallischer Werkstoff herstellen.

Beispielsweise lässt sich ein faserverstärkter carbidkeramischer Werkstoff herstellen, wobei bei einer Carbidbildnerinfiltration durch die Carbidschicht die kohlenstoffhaltigen Fasern gegenüber reaktivem Angriff des Carbidbildners während dieser Infiltration geschützt sind.

Die nachfolgende Beschreibung bevorzugter Ausführungsformen dient im Zusammenhang mit den Zeichnungen der näheren Erläuterung der Erfindung. Es zeigen:
- Figur 1: schematisch einen Schritt des Eintauchens eines Fasergebildes in eine Schmelze;
- Figur 2: schematisch die Herstellung einer Carbidschicht an einem Kohlenstoff-Fasergebilde;
- Figur 3: eine REM-Aufnahme von Faserfilamenten eines Faserbündels, welche erfindungsgemäß mit einer Carbidschicht versehen wurden (die Beschichtung ist eine SiC-Beschichtung); und
- Figur 4: schematisch ein weiteres Ausführungsbeispiel, bei dem ein Fasergebilde mit einer äußeren Kohlenstoffschicht als Opferschicht mit einer Carbidbeschichtung versehen wird.

Erfindungsgemäß ist es vorgesehen, dass Fasern eines Fasergebildes mit einer Carbidbeschichtung versehen werden, wobei die Fasern des Fasergebildes kohlenstoffhaltig sind.

Ein solches beschichtetes und dadurch "passiviertes" Fasergebilde kann beispielsweise verwendet werden, um ein faserverstärktes carbidkeramisches Bauteil herzustellen, wobei bei der Carbidbildung selber (, welche durch die Reaktion von Carbidbildner mit Kohlenstoff erfolgt) das Fasergebilde nicht oder nur im geringen Umfang angegriffen wird, da eben die Carbidbeschichtung den Zugang zum Kohlenstoffmaterial der Fasern sperrt oder zumindest behindert.

Die Fasern des Fasergebildes können dabei einzelne Faserfilamente sein oder sie können Faserbündel sein, welche sich aus mehreren Faserfilamenten zusammensetzen.

Das Fasergebilde wiederum kann aus Einzelfasern im Sinne von Einzel-Faserbündeln oder Einzel-Filamenten bestehen, es kann durch Kurzfasern (welche in der Regel eine Größe kleiner oder gleich 60 mm aufweisen) bestehen, oder es kann sich beispielsweise um ein Gewebe, Gewirke oder Gestricke aus Faserbündeln bzw. Faserfilmanten handeln.

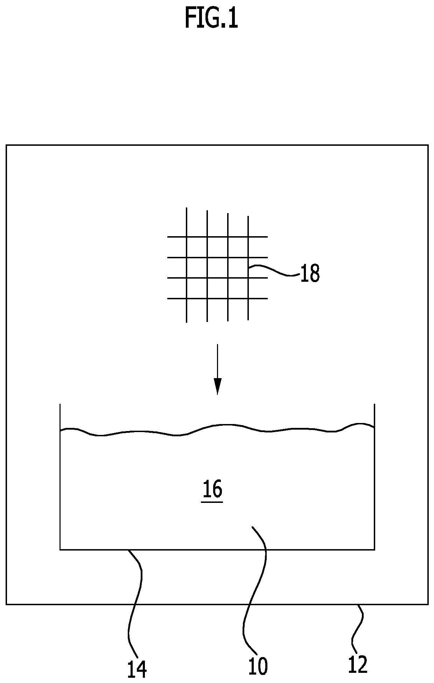

Bei einer Ausführungsform (Figur 1) wird eine Schmelze 10 aus Carbidbildner hergestellt. Der Carbidbildner ist beispielsweise Hafnium, Zirconium, Silicium oder Wolfram.

Bei einem konkreten Ausführungsbeispiel ist der Carbidbildner Silicium.

Zur Herstellung der Schmelze wird der Carbidbildner 10 auf seine Schmelztemperatur erhitzt. Bei Silicium als Carbidbildner liegt diese Schmelztemperatur bei ca. 1400°C.

Bei einer konkreten Ausführungsform erfolgt die Erhitzung des Carbidbildners in einem Ofen 12. Die Schmelze des Carbidbildners 10 ist in einem Behälter 14 aufgenommen.

Dem Carbidbildner 10 wird Bor zugegeben, insbesondere wenn der Carbidbildner Silicium oder Zirconium ist. Eine entsprechende Schmelze 16 ist dann eine Carbidbildner(Silcium)-Bor-Schmelze.

Insbesondere liegt der Massenanteil von Bor in der Schmelze 16 bei ca. 8 Prozent. Er liegt vorzugsweise im Bereich zwischen 2 Prozent und 20 Prozent und vorzugsweise im Bereich zwischen 6 Prozent und 10 Prozent.

Es kann grundsätzlich vorgesehen sein, dass die Schmelze 16 ein eutektisches Silicium-Bor-Gemisch ist.

Es hat sich gezeigt, dass durch den Zusatz von Bor in der Schmelze 16 sich eine kontrollierte Reaktion zwischen Carbidbildner und Kohlenstoff einer Faser für die Herstellung der Carbidbeschichtung erhalten lässt.

Das Fasergebilde 18, welches bei dem beschriebenen Beispiel ein Gewebe aus Fasern in der Form von Faserbündeln ist, wird für eine bestimmte Zeitdauer in die Schmelze 16 eingetaucht.

Dadurch wird der Kohlenstoff im Fasergebilde 18 in Kontakt gebracht mit dem Carbidbildner und es kann die Carbidbeschichtung durch Reaktion des Carbidbildners (insbesondere Silicium) mit dem Kohlenstoff des Fasergebildes 18 reagieren zur Carbidbildung.

Die Zeitdauer des Kontakts zwischen der Schmelze 10 und dem Fasergebilde 18 bestimmt die Schichtdicke der hergestellten Carbidschicht an Fasern des Fasergebildes 18.

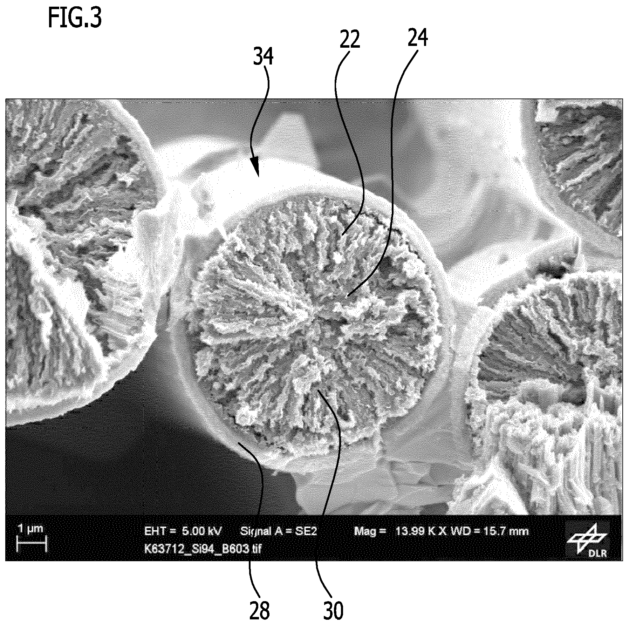

Bei einem konkreten Ausführungsbeispiel wird ein Fasergebilde 18, welches ein Gewebe aus Kohlenstofffasern ist, wobei die Fasern (als Faserbündel) in dem Fasergebilde 18 einen Durchmesser von ca. 10 µm haben (vergleiche Figur 3), für ca. 12 min in die Schmelze 16 eingetaucht.

Es lässt sich dadurch eine Carbidschicht (Siliciumcarbid-)Schicht an den entsprechenden Fasern herstellen, welche eine Dicke von ca. 0,5 µm aufweist.

Grundsätzlich lässt sich durch eine kürzere Kontaktdauer eine dünnere Schicht herstellen und durch eine längere Kontaktdauer lässt sich eine dickere Schicht herstellen.

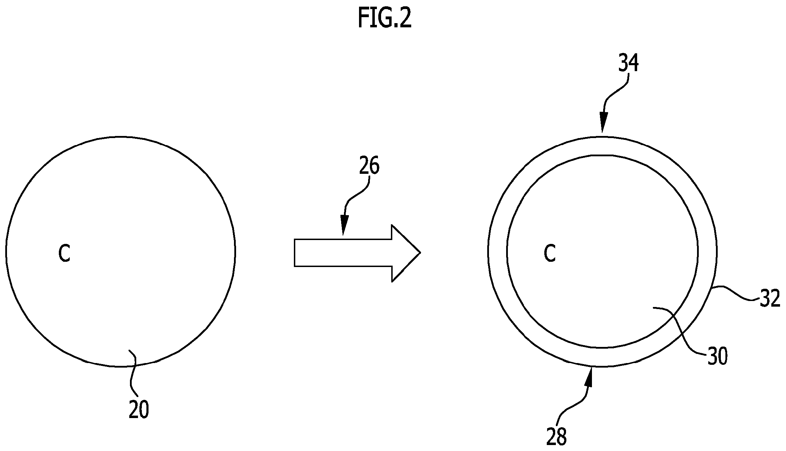

In Figur 2 ist dies schematisch für eine Faser 20 gezeigt. Die Faser 20 ist eine Kohlenstofffaser, das heißt sie besteht aus Kohlenstoff. Die Faser 20 kann dabei ein einzelnes Faserfilament sein oder ein Faserbündel 22 (vergleiche Figur 3) aus einer Mehrzahl von Faserfilamenten 24 (Figur 3). Die Faserfilamente 24 selber sind wiederum aus Kohlenstoff.

Die Faser 20 wird in die Schmelze 16 eingetaucht, welches durch den Pfeil mit dem Bezugszeichen 26 angedeutet ist. Das entsprechende Kontaktbringen zwischen dem Kohlenstoffmaterial der Faser 20 und der Schmelze 16 erfolgt für eine bestimmte Zeitdauer wie beispielsweise ca. 12 min (oder weniger oder mehr, je nach gewünschter Beschichtungsdicke). Insbesondere ist die Kontaktzeit zwischen der Faser 20 und der Schmelze 16 gesteuert.

Durch die Reaktion des Carbidbildners 10 in der Schmelze 16 mit dem Kohlenstoff der Faser 20 bildet sich eine Carbidschicht 28 an einem Kohlenstoffkern 30 der Faser 20. Die Carbidschicht 28 umgibt als Mantel (Hülle) den Kohlenstoffkern 30. Dieser ist dadurch nach außen geschützt. Die Carbidschicht 28 bildet eine äußere Oberfläche 32 der aus der Faser 20 hergestellten beschichteten Faser 34.

Wenn die Faser 20 ein Faserfilament ist, dann ist der Kohlenstoffkern 30 der verbliebene Rest des Faserfilaments, welcher nicht mit dem Carbidbildner reagiert hat.

In Figur 3 ist ein REM-Bild von beschichteten Faserfilamenten 34 als Fasern 20 gezeigt, wobei diese beschichteten Faserfilamente 34 in einem Faserbündel 22 angeordnet sind.

Der Kohlenstoffkern 30 ist in Figur 3 erkennbar. Ferner ist die Carbidschicht 28 mit einer Dicke von ca. 0,5 µm erkennbar.

Das Faserbündel 22 setzt sich zusammen aus einer Vielzahl von Faserfilamenten 34. Ein Faserbündel 22 kann mehrere Tausend Faserfilamente 34 aufweisen. Es wird dabei insbesondere das Faserbündel 22 in Kontakt mit der Schmelze 16 gebracht. Flüssiger Carbidbildner der Schmelze 16 tritt in die Zwischenräume zwischen den Faserfilamenten 34 des Faserbündels 22 ein. Es wird insbesondere durch Kapillarkräfte in diese Zwischenräume gezogen. Dadurch kann an jedem Faserfilament 34 die Carbidmaterial-Umhüllung erfolgen.

Das Faserbündel 22 weist dann in dem Sinn eine Carbidmaterial-Umhüllung auf, dass jedes Faserfilament 34 mit Carbidmaterial beschichtet ist (vergleiche Figur 3).

Diese Carbidschicht 28 bildet eine Umhüllung (einen Mantel) um den Kohlenstoffkern 30 und passiviert dadurch den Kohlenstoffkern 30 bezüglich eines Angriffs von beispielsweise Carbidbildner in einem nachträglichen Verfahren.

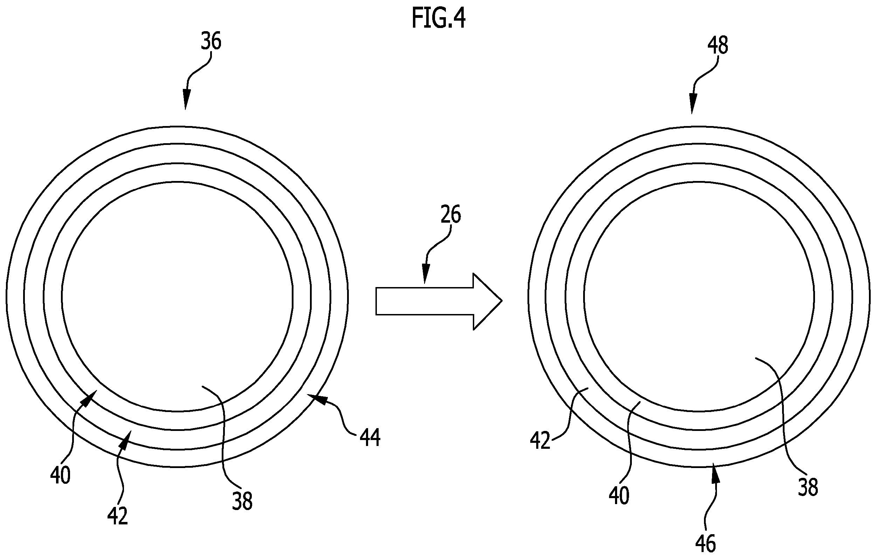

Bei einem weiteren Ausführungsbeispiel, welches in Figur 4 schematisch gezeigt ist, ist eine Faser 36 (insbesondere Faserfilament) vorgesehen, welche einen Kern 38 aus Kohlenstoff aufweist. Dieser Kern 38 ist mit mindestens einer funktionellen Beschichtung 40, 42 versehen. Bei dem gezeigten Ausführungsbeispiel sind eine erste funktionelle Beschichtung 40 vorgesehen und eine zweite funktionelle Beschichtung 42 vorgesehen. Die erste funktionelle Beschichtung 40 ist an dem Kern 38 angeordnet. Die zweite funktionelle Beschichtung 42 ist an der ersten funktionellen Beschichtung 40 angeordnet.

Die erste funktionelle Beschichtung 40 umgibt den Kern 38 als Mantel. Die zweite funktionelle Beschichtung 42 umgibt die erste funktionelle Beschichtung 40 als Mantel.

Es ist weiterhin eine Schicht 44 aus Kohlenstoff vorgesehen, welche als Mantel die zweite funktionelle Beschichtung 42 umgibt.

Die Kohlenstoff-Schicht 44 dient als Opferschicht, um eine Carbidbeschichtung herzustellen.

Die entsprechende Faser 36 wird (einzeln oder in einem Faserbündel) in die Schmelze 16 eingetaucht.

Der Kohlenstoff der Schicht 44 reagiert mit dem Carbidbildner und es bildet sich eine Carbidschicht (Carbidbeschichtung 46). Diese umgibt als Mantel die zweite funktionelle Beschichtung 42.

Die entsprechend hergestellte beschichtete Faser 48 weist als Mantel die Carbidschicht 46 auf, welche einen Kern umgibt, wobei der Kern selber aus dem Kern 38 und den funktionellen Beschichtungen 40, 42 besteht.

Die Kohlenstoff-Schicht 44 ist an der Faser 36 aufgetragen, damit die Carbidschicht 46 als Passivierungsschicht hergestellt werden kann.

Oben wurde die Bildung der Carbidschicht 28 bzw. 46 im Zusammenhang mit einem Eintauchen des entsprechenden Fasergebildes 18 in die Schmelze 16 beschrieben.

Das Kontaktbringen der Schmelze 16 mit dem Fasergebilde 18 kann auch auf andere Weise erfolgen. Beispielsweise ist es möglich, dass die Schmelze insbesondere gesteuert auf das Fasergebilde 18 aufgetragen wird wie beispielsweise "aufgetröpfelt" oder aufgegossen wird.

Es ist beispielsweise auch möglich, dass das Fasergebilde 18 insbesondere gesteuert durch eine Schmelze gezogen wird, oder dass eine Schmelze insbesondere gesteuert über das Fasergebilde 18 geströmt wird.

Bei der erfindungsgemäßen Lösung ist es vorgesehen, dass das In-Kontakt-Bringen des Fasergebildes 18 mit der Schmelze 16 derart isoliert erfolgt, dass der Carbidbildner der Schmelze 16 nur mit Kohlenstoff des Fasergebildes 18 reagieren kann. Es ist insbesondere keine Kohlenstoffmatrix oder dergleichen an dem Fasergebilde 18 vorgesehen. Das Verfahren dient allein dazu, einen Teil des Kohlenstoffs des Fasergebildes 18 in Reaktion mit Carbidbildner zu bringen, um eine Carbidbeschichtung (die Carbidschicht 28 bzw. 46) zu erzeugen.

Das Endergebnis des Verfahrens sind dann beschichtete Fasern 34, 48 in einem beschichteten Fasergebilde. Das beschichtete Fasergebilde kann dabei wieder die Form des ursprünglichen Fasergebildes 18 haben und kann beispielsweise ein Gewebe, Gewirke oder Gestricke sein, oder es kann Kurzfasern umfassen oder es kann eine Endlosfaser sein.

Dieses beschichtete Fasergebilde lässt sich dann weiter verwenden, um beispielsweise einen faserverstärkten Kompositwerkstoff herzustellen. Beispielsweise wird ein carbidkeramischer Werkstoff hergestellt, indem das so hergestellte beschichtete Fasergebilde mit einem Kohlenstoff-Precursor-Material infiltriert wird, eine Aushärtung durchgeführt wird und eine anschließende Pyrolyse durchgeführt wird. Der dabei entstandene offenporöse Kohlenstoffkörper wird dann mit Carbidbildner wie Silicium infiltriert, um ein C/C-SiC- oder C/SiC-Material herzustellen. In den genannten Materialien steht dabei das erste C für die Kohlenstofffasern.

Durch die Carbidbeschichtung des entsprechenden Fasergebildes kann Carbidbildner bei der Carbidbildnerinfiltrierung die Fasergebilde nicht oder weniger stark angreifen und die "strukturelle Integrität" bezogen auf den Kohlenstoff des Fasergebildes bleibt erhalten.

Erfindungsgemäß wird ein Fasergebilde aus einem Fasergebilde 18 hergestellt, welches bezüglich seiner Fasern (insbesondere als Faserbündel mit Faserfilamenten) eine Carbidumhüllung um einen Kern umfasst.

Es hat sich gezeigt, dass die Zugabe von Bor zu der Carbidbildner-Schmelze eine kontrollierte Reaktion für die Carbidbildung ermöglicht.

Es lassen sich dabei insbesondere Faserfilamente 20 bzw. 36 einer Dicke im Bereich zwischen ca. 1 µm und 15 µm mit einer entsprechenden Carbidbeschichtung versehen, wobei insbesondere die dann hergestellte Carbidschicht 28 bzw. 46 eine Dicke beispielsweise im Bereich zwischen 0,2 µm und 5 µm haben kann. Auch andere Dicken sind möglich.

Es lässt sich insbesondere über Steuerung der Kontaktzeit zwischen der Schmelze 16 und dem Fasergebilde 18 eine definierte Schichtdicke herstellen.

Es hat sich gezeigt, dass sich eine homogene Beschichtung mit mindestens näherungsweise gleichmäßiger Schichtdicke an einem Fasergebilde 18 herstellen lässt (siehe Figur 3).

Das entsprechend beschichtete Fasergebilde lässt sich beispielsweise verwenden, um faserverstärkte Keramikwerkstoffe oder faserverstärkte metallische Werkstoffe herstellen zu können.

### Bezugszeichenliste

- 10: Carbidbildner
- 12: Ofen
- 14: Behälter
- 16: Schmelze
- 18: Fasergebilde
- 20: Faser
- 22: Faserbündel
- 24: Faserfilament
- 26: "Eintauchen in Schmelze"
- 28: Carbidschicht
- 30: Kohlenstoffkern
- 32: Äußere Oberfläche
- 34: Beschichtetes Faserfilament
- 36: Faser
- 38: Kern
- 40: Erste funktionelle Beschichtung
- 42: Zweite funktionelle Beschichtung
- 44: Schicht
- 46: Carbidschicht
- 48: Beschichtete Faser

## Patentansprüche

1. Verfahren zur Beschichtung eines kohlenstoffhaltigen Fasergebildes, bei dem eine Schmelze hergestellt wird, welche einen Carbidbildner umfasst, und das Fasergebilde in Kontakt mit der Schmelze gebracht wird, wobei das Fasergebilde derart mit der Schmelze in Kontakt gebracht wird, dass die Schmelze ausschließlich mit Kohlenstoff des Fasergebildes reagiert, wobei der Carbidbildner mit Kohlenstoff des Fasergebildes reagiert und eine Carbidschicht bildet, und wobei das kohlenstoffhaltige Fasergebilde mindestens eines der Folgenden ist:
- ein Faserfilament, welches insbesondere aus Kohlenstoff ist,
- ein Faserbündel aus Faserfilamenten,
- ein Gewebe, Gewirke, Gestricke aus Faserbündeln oder Faserfilamenten,
- Kurzfasern.

2. Verfahren nach Anspruch 1, **dadurch gekennzeichnet, dass** ein äußerer Mantel einer Faser des kohlenstoffhaltigen Fasergebildes aus Kohlenstoff ist.

3. Verfahren nach einem der vorangehenden Ansprüche, **dadurch gekennzeichnet, dass** an einer Faser des Fasergebildes eine Carbidschicht als äußerer Mantel hergestellt wird.

4. Verfahren nach einem der vorangehenden Ansprüche, **dadurch gekennzeichnet, dass** das kohlenstoffhaltige Fasergebilde vollständig aus Kohlenstoff hergestellt ist oder eine äußere Kohlenstoffschicht umfasst.

5. Verfahren nach einem der vorangehenden Ansprüche, **dadurch gekennzeichnet, dass** an einem Faserbündel aus einer Mehrzahl von Faserfilamenten im Wesentlichen alle Faserfilamente mit einer Carbid-Umhüllung versehen sind.

6. Verfahren nach einem der vorangehenden Ansprüche, **dadurch gekennzeichnet, dass** die Schmelze Bor enthält und insbesondere ein Carbidbildner-Bor-Gemisch ist.

7. Verfahren nach Anspruch 6, **dadurch gekennzeichnet, dass** der Anteil an Bor in der Schmelze im Bereich zwischen 2 Massenprozent und 20 Massenprozent liegt und insbesondere im Bereich zwischen 6 Massenprozent und 10 Massenprozent liegt und insbesondere bei ca. 8 Massenprozent liegt.

8. Verfahren nach Anspruch 6 oder 7, **dadurch gekennzeichnet, dass** die Schmelze eutektisch ist.

9. Verfahren nach einem der vorangehenden Ansprüche, **dadurch gekennzeichnet, dass** eine Kontaktzeit des Fasergebildes mit der Schmelze derart gesteuert wird, dass sich eine bestimmte Schichtdicke einer äußeren Carbidschicht an einer Faser des Fasergebildes ergibt.

10. Verfahren nach einem der vorangehenden Ansprüche, **dadurch gekennzeichnet, dass** das In-Kontakt-Bringen des Fasergebildes mit der Schmelze in einem Ofen durchgeführt wird.

11. Verfahren nach einem der vorangehenden Ansprüche, **dadurch gekennzeichnet, dass** eine Kontaktzeit zwischen dem Fasergebilde und der Schmelze mindestens 5 s und insbesondere mindestens 2 min und insbesondere mindestens 4 min und insbesondere mindestens 6 min und insbesondere mindestens 8 min und insbesondere mindestens 10 min und insbesondere bei ca. 12 min liegt.

12. Verfahren nach einem der vorangehenden Ansprüche, **dadurch gekennzeichnet, dass** eine Faser des Fasergebildes eine Dicke im Bereich zwischen 1 µm und 15 µm aufweist und/oder dass eine Schichtdicke der hergestellten Carbidschicht an einer Faser des Fasergebildes im Bereich zwischen 0,2 µm und 5 µm liegt.

13. Verfahren nach einem der vorangehenden Ansprüche, **dadurch gekennzeichnet, dass** das Fasergebilde in die Schmelze eingetaucht wird, wobei insbesondere die Schmelze in einem Behälter aufgenommen ist.

14. Verfahren nach einem der vorangehenden Ansprüche, **dadurch gekennzeichnet, dass** der Carbidbildner Silicium ist.

15. Verfahren zur Herstellung eines faserverstärkten Werkstoffes, bei dem mindestens ein Fasergebilde verwendet wird, welches nach dem Verfahren gemäß einem der vorangehenden Ansprüche hergestellt wird.

## Claims

1. Method for coating a carbon-containing fibrous structure, in which method a melt is produced which comprises a carbide former, and in which the fibrous structure is contacted with the melt, wherein the fibrous structure is contacted with the melt such that the melt reacts exclusively with carbon of the fibrous structure, wherein the carbide former reacts with carbon of the fibrous structure and forms a carbide layer, and wherein the carbon-containing fibrous structure is at least one of the following:
- a fiber filament which, in particular, is of carbon,
- a fiber bundle of fiber filaments,
- a woven fabric, a warp-knitted fabric, a weft-knitted fabric of fiber bundles or fiber filaments,
- short fibers.

2. Method in accordance with claim 1, **characterized in that** an outer sheath of a fiber of the carbon-containing fibrous structure is of carbon.

3. Method in accordance with any one of the preceding claims 1, **characterized in that** a carbide layer as an outer sheath is produced on a fiber of the fibrous structure.

4. Method in accordance with any one of the preceding claims, **characterized in that** the carbon-containing fibrous structure is produced completely of carbon or comprises an outer carbon layer.

5. Method in accordance with any one of the preceding claims, **characterized in that** in a fiber bundle of a plurality of fiber filaments, substantially all of the fiber filaments are provided with a carbide envelope.

6. Method in accordance with any one of the preceding claims, **characterized in that** the melt contains boron and, in particular, is a carbide former-boron mixture.

7. Method in accordance with claim 6, **characterized in that** the fraction of boron in the melt is in the range between 2 mass percent and 20 mass percent, and is in particular in the range between 6 mass percent and 10 mass percent, and is in particular approximately 8 mass percent.

8. Method in accordance with claim 6 or 7, **characterized in that** the melt is eutectic.

9. Method in accordance with any one of the preceding claims, **characterized in that** a contact time of the fibrous structure with the melt is controlled such that a certain thickness of an outer carbide layer on a fiber of the fibrous structure results.

10. Method in accordance with any one of the preceding claims, **characterized in that** contacting the fibrous structure with the melt is carried out in a furnace.

11. Method in accordance with any one of the preceding claims, **characterized in that** a contact time between the fibrous structure and the melt is at least 5 s, and is in particular at least 2 min, and is in particular at least 4 min, and is in particular at least 6 min, and is in particular at least 8 min, and is in particular at least 10 min, and is in particular approximately 12 min.

12. Method in accordance with any one of the preceding claims, **characterized in that** a fiber of the fibrous structure has a thickness in the range between 1 µm and 15 µm and/or **in that** a layer thickness of the carbide layer produced on a fiber of the fibrous structure is in a range between 0.2 µm and 5 µm.

13. Method in accordance with any one of the preceding claims, **characterized in that** the fibrous structure is immersed in the melt, in particular wherein the melt is received in a container.

14. Method in accordance with any one of the preceding claims, **characterized in that** the carbide former is silicon.

15. Method for producing a fiber-reinforced material, in which method at least one fibrous structure is used which is produced according to the method in accordance with any one of the preceding claims.

## Revendications

1. Procédé de revêtement d'une structure fibreuse contenant du carbone, dans lequel une masse fondue, qui comprend un formateur de carbure, est fabriquée et la structure fibreuse est amenée en contact avec la masse fondue, dans lequel la structure fibreuse est amenée en contact avec la masse fondue de telle manière que la masse fondue réagit exclusivement avec le carbone de la structure fibreuse, dans lequel le formateur de carbure réagit avec le carbone de la structure fibreuse et forme une couche de carbure, et dans lequel la structure fibreuse contenant du carbone est au moins un des éléments suivants :
- un filament de fibre, qui est en particulier en carbone,
- un faisceau de fibres composé de filaments de fibres,
- un tissu, une maille, un tricot composé/composée de paquets de fibres ou de filaments de fibres,
- des fibres courtes.

2. Procédé selon la revendication 1, **caractérisé en ce qu'**une enveloppe extérieure d'une fibre de la structure fibreuse contenant du carbone est en carbone.

3. Procédé selon l'une quelconque des revendications précédentes, **caractérisé en ce qu'**une couche de carbure est fabriquée en tant qu'enveloppe extérieure sur une fibre de la structure fibreuse.

4. Procédé selon l'une quelconque des revendications précédentes, **caractérisé en ce que** la structure fibreuse contenant du carbone est entièrement fabriquée à partir de carbone ou comprend une couche extérieure de carbone.

5. Procédé selon l'une quelconque des revendications précédentes, **caractérisé en ce que** sensiblement tous les filaments de fibres sur un paquet de fibres composé d'une multitude de filaments de fibres sont pourvus d'une gaine en carbure.

6. Procédé selon l'une quelconque des revendications précédentes, **caractérisé en ce que** la masse fondue contient du bore et est en particulier un mélange formateur de carbure-bore.

7. Procédé selon la revendication 6, **caractérisé en ce que** la proportion de bore dans la masse fondue se situe dans la plage entre 2 % en masse et 20 % en masse et se situe en particulier dans la plage comprise entre 6 % en masse et 10 % en masse et est en particulier de l'ordre d'environ 8 % en masse.

8. Procédé selon la revendication 6 ou 7, **caractérisé en ce que** la masse fondue est eutectique.

9. Procédé selon l'une quelconque des revendications précédentes, **caractérisé en ce qu'**un temps de contact de la structure fibreuse avec la masse fondue est commandé de manière à obtenir une certaine épaisseur de couche d'une couche extérieure de carbure sur une fibre de la structure fibreuse.

10. Procédé selon l'une quelconque des revendications précédentes, **caractérisé en ce que** la mise en contact de la structure fibreuse avec la masse fondue est réalisée dans un four.

11. Procédé selon l'une quelconque des revendications précédentes, **caractérisé en ce qu'**un temps de contact entre la structure fibreuse et la masse fondue est d'au moins 5 s et en particulier d'au moins 2 min et en particulier d'au moins 4 min et en particulier d'au moins 6 min et en particulier d'au moins 8 min et en particulier d'au moins 10 min et en particulier est d'environ 12 min.

12. Procédé selon l'une quelconque des revendications précédentes, **caractérisé en ce qu'**une fibre de la structure fibreuse présente une épaisseur dans la plage entre 1 µm et 15 µm et/ou qu'une épaisseur de couche de la couche de carbure fabriquée sur une fibre de la structure fibreuse se situe dans la plage entre 0,2 µm et 5 um.

13. Procédé selon l'une quelconque des revendications précédentes, **caractérisé en ce que** la structure fibreuse est plongée dans la masse fondue, dans lequel la masse fondue est reçue en particulier dans un contenant.

14. Procédé selon l'une quelconque des revendications précédentes, **caractérisé en ce que** le formateur de carbure est le silicium.

15. Procédé de fabrication d'un matériau renforcé par des fibres, dans lequel au moins une structure fibreuse est utilisée, laquelle est fabriquée selon le procédé selon l'une quelconque des revendications précédentes.
